# EUROPÄISCHE PATENTSCHRIFT

(11) **EP 3 821 290 B1**
(45) Veröffentlichungstag und Bekanntmachung des Hinweises auf die Patenterteilung: **20.07.2022**
(21) Anmeldenummer: 19725657.1
(22) Anmeldetag: 10.05.2019
(51) Int. Cl.: G02B 27/02, G02B 27/01, H04N 13/395

(54) **ANZEIGEVORRICHTUNG FÜR EIN KRAFTFAHRZEUG, VERFAHREN ZUR ERZEUGUNG EINER VIRTUELLEN DARSTELLUNG VON OPTISCHEN BILDINFORMATIONEN, SOWIE KRAFTFAHRZEUG**
DISPLAY DEVICE FOR A MOTOR VEHICLE, METHOD FOR GENERATING A VIRTUAL DISPLAY OF OPTICAL IMAGE INFORMATION, AND MOTOR VEHICLE
DISPOSITIF D'AFFICHAGE POUR UN VÉHICULE AUTOMOBILE, PROCÉDÉ SERVANT À PRODUIRE UNE REPRÉSENTATION VIRTUELLE D'INFORMATIONS D'IMAGE OPTIQUES, ET VÉHICULE AUTOMOBILE

(30) Priorität: 13.07.2018 DE 102018211747
(43) Veröffentlichungstag der Anmeldung: 19.05.2021
(73) Patentinhaber: Audi AG, 85049 Ingolstadt (DE)
(72) Erfinder: LOTTES, Daniel, 93346 Ihrlerstein (DE); WEIß, Philipp, 40629 Düsseldorf (DE)
(86) Internationale Anmeldenummer: PCT/EP2019/062085
(87) Internationale Veröffentlichungsnummer: WO 2020/011418

(56) Entgegenhaltungen:
- JP-A- 2006 135 378
- JP-A- 2012 088 739
- JP-U- H0 634 689

## Beschreibung

Die Erfindung betrifft eine Anzeigevorrichtung für ein Kraftfahrzeug, mit zumindest einem elektronischen Display, mit einem ersten Spiegel und einem dazu beabstandet angeordneten zweiten Spiegel, wobei die beiden Spiegel so angeordnet sind, dass sie bei einer Projektionsbetrachtung auf beide Spiegel zumindest bereichsweise überlappend angeordnet sind, und in dem Überlappungsbereich ein Zwischenraum zwischen den Spiegeln ausgebildet ist. Des Weiteren betrifft die Erfindung ein Kraftfahrzeug mit einer Anzeigevorrichtung, wobei mit der Anzeigevorrichtung eine optische Information in einer virtuellen Bildebene darstellbar ist. Weiter betrifft die Erfindung ein Verfahren zur Erzeugung einer virtuellen Darstellung von optischen Informationen in einer virtuellen Bildebene mit einer entsprechenden Anzeigevorrichtung.

Die DE 10 2014 019 122 A1 beschreibt ein Verfahren zum Betreiben eines Anzeigesystems eines Kraftwagens, bei welchem mittels einer Anzeigeeinrichtung unter Vermittlung einer Spiegelanordnung ein erstes Objekt und ein zweites Objekt in zwei hintereinander angeordneten virtuellen Bildebenen angezeigt werden, solange die erfasste Augenposition mit einer vorgegebenen Augenposition übereinstimmt. Die Anzeigeeinrichtung wird derart angesteuert, dass eine relative Anordnung der Objekte zueinander so eingestellt wird, dass die Objekte in Form einer über die virtuellen Bildebenen bezüglich einer vorgegebenen Sichtlinie fluchtenden zusammenhängenden Graphik angezeigt werden. Sobald eine Abweichung zwischen der erfassten Augenposition und der vorgegebenen Augenposition erfasst wird, wird mittels der Steuereinrichtung ein Parallaxenausgleich vorgenommen.

Die DE 10 2014 016 324 A1 beschreibt ein Anzeigesystem für einen Kraftwagen, mit wenigstens einer, zumindest zwei Anzeigebereiche aufweisenden Anzeigeeinrichtung und einer zumindest einen teiltransparenten Spiegel sowie einen weiteren Spiegel aufweisenden Spiegelanordnung. Die Anzeigeeinrichtung und die Spiegelanordnung sind derart zueinander angeordnet, dass jeweilige mittels der beiden Anzeigebereiche angezeigte Objekte in zwei hintereinander angeordneten virtuellen Bildebenen angezeigt werden. Die Anzeigeeinrichtung ist in ihrer bestimmungsgemäßen Anordnung des Anzeigesystems im Kraftwagen in Fahrzeughochrichtung oberhalb von der Spiegelanordnung angeordnet. Des Weiteren sind dort ein Verfahren zum Betreiben eines Anzeigesystems sowie ein Kraftwagen mit wenigstens einem Anzeigesystem genannt.

Die Dokumente JP2012 088739, JP2006 135378, JP H06 34689 offenbaren weitere Beispiele für Anzeigesysteme aus dem Stand der Technik.

Ein Nachteil des Stands der Technik ist, dass die Bilddarstellung begrenzt ist.

Eine Aufgabe der vorliegenden Erfindung besteht darin, dass eine Anzeigevorrichtung und eine Verfahren zum Erzeugen einer Bilddarstellung zu schaffen, bei welcher beziehungsweise bei welchem die Bilddarstellung vielfältiger und bezüglich einer räumlichen Wahrnehmung verbessert ist.

Diese Aufgabe wird durch eine Anzeigevorrichtung, ein Verfahren und ein Kraftfahrzeug gemäß den unabhängigen Patentansprüchen gelöst. Sinnvolle Weiterbildungen ergeben sich aus den Unteransprüchen.

Ein Aspekt der Erfindung betrifft eine Anzeigevorrichtung für ein Kraftfahrzeuge, mit zumindest einem elektronischen Display, mit einem ersten Spiegel und einem dazu beabstandet angeordneten zweiten Spiegel. Die beiden Spiegel sind so angeordnet, dass sie bei einer Projektionsbetrachtung auf beide Spiegel zumindest bereichsweise überlappend angeordnet sind, und in dem Überlappungsbereich ein Zwischenraum zwischen den Spiegeln ausgebildet ist. Die Anzeigevorrichtung weist zumindest eine Lichtquelle auf, die so angeordnet ist, dass deren Licht in den Zwischenraum emittierbar ist und dort an den Spiegeln zur Erzeugung eines Endlosspiegeleffekts mehrfach reflektierbar ist, so dass in einer Bildebene der Anzeigevorrichtung ein Bild mit einem mit optischer Tiefenwirkung erscheinendem Lichtmuster entsteht beziehungsweise erzeugt ist. Dadurch ist eine Bilddarstellung verbessert, insbesondere bezüglich der räumlichen Darstellung von optischen Informationen. Dadurch lassen sich optische Informationen auch vielfältiger darstellen. Es ist somit eine höhere Variabilität bei der Bilddarstellung erreicht. Insbesondere kann somit auch eine bezüglich der räumlichen Darstellung realitätsnähere Anzeige ermöglicht werden. Die Projektionsbetrachtung erfolgt insbesondere senkrecht zu den Spiegeln, so dass eine Projektionsebene insbesondere parallel zu den Spiegeln liegt.

Insbesondere kann mit der Anordnung der Komponenten der Anzeigevorrichtung ein holografisch wirkendes Bild erzeugt werden.

Die beiden Spiegel sind vorzugsweise so angeordnet, dass stets ein definierter Abstand zwischen den beiden Spiegeln eingehalten wird. Der erste Spiegel kann beispielsweise parallel zum zweiten Spiegel angeordnet sein. Insbesondere können sich die beiden Spiegel teilweise überlappen und so den Zwischenraum entstehen lassen. Die Breite des Zwischenraums kann insbesondere dem definierten Abstand zwischen dem ersten Spiegel und dem zweiten Spiegel entsprechen. Der Zwischenraum ist somit senkrecht zu den Spiegeln betrachtet durch die beiden Spiegelflächen begrenzt, andererseits parallel zu den Spiegeln betrachtet durch die die Flächenausmaße der Spiegel begrenzt. Der Zwischenraum erstreckt sich somit nicht über die Ausmaße der Spiegel hinaus.

Insbesondere sind die beiden Spiegel parallel zueinander angeordnet. Sie können flächenmäßig gleich groß der aber auch unterschiedlich groß ausgebildet sein. Es kann auch vorgesehen sein, dass die beiden Spiegel bei der Projektionsbetrachtung deckungsgleich angeordnet sind.

Insbesondere ist die eine einzige Bildebene im Bereich der Spiegel ausgebildet. Insbesondere ist die Bildebene zwischen dem Spiegel und somit im Zwischenraum ausgebildet.

Die Lichtquelle kann beispielsweise so angeordnet werden, dass das Licht der Lichtquelle in den Zwischenraum zwischen den beiden Spiegeln emittiert bzw. abgestrahlt werden kann. Dabei wird insbesondere ein Lichtstrahl des Lichts vom ersten Spiegel zum zweiten Spiegel und umgekehrt mehrfach bzw. unendlich reflektiert. Durch insbesondere die mehrfache Reflexion des Lichtstrahls wird in der einzigen Bildebene der Anzeigevorrichtung das mit optischer Tiefenwirkung erscheinende Lichtmuster erzeugt. Dadurch kann beispielsweise das Bild, welches in der Bildebene dargestellt werden kann, in Kombination mit dem Lichtmuster für einen Betrachter holografisch bzw. schwebend dargestellt werden. Dadurch wird insbesondere eine dreidimensionale Wahrnehmung des Bildes erreicht.

In einer vorteilhaften Ausführungsform ist vorgesehen, dass eine Lichtquelle eine zum Display separate Komponente ist, insbesondere eine Leuchtdiode oder ein Leuchtdiodenband ist. Die Lichtquelle kann daher eine zum Display extern Einheit sein und unabhängig von dem elektronischen Display angeordnet sein. Beispielsweise kann die Lichtquelle als Leuchtdiodenband ausgebildet sein, um auch ein linienförmiges Emittieren des Lichtes zu ermöglichen. Insbesondere kann das Band eine Länge aufweisen, die im Wesentlichen oder genau der Länge des Zwischenraums entspricht. Dadurch kann eine möglichst gleichmäßige Lichteinstrahlung in den Zwischenraum über die gesamte Länge des Zwischenraums erfolgen. Ebenfalls kann die Anzeigevorrichtung beispielsweise mehrere separate Lichtquellen aufweisen, welche als einzelne Leuchtdioden ausgebildet sein können.

Vorzugsweise ist vorgesehen, dass die Lichtquelle zumindest bereichsweise in dem durch die Spiegel begrenzten Zwischenraum angeordnet ist. Um insbesondere den Lichtstrahl der Lichtquelle auf kurzem Weg an dem ersten bzw. zweiten Spiegel mehrfach reflektieren zu können, wird die Lichtquelle vorzugsweise in dem Zwischenraum der beiden Spiegel angeordnet. Dabei kann die Lichtquelle beispielsweise an einem Ende des Zwischenraums angebracht sein. Ebenfalls kann die Lichtquelle so angebracht sein, dass insbesondere ein Abstand zwischen der Lichtquelle und der beiden Spiegeln gleich ist oder das die Lichtquelle entweder näher an dem ersten Spiegel oder näher an dem zweiten Spiegel angebracht ist. Indem die zumindest eine Lichtquelle zumindest bereichsweise in den Zwischenraum hineinragend angeordnet ist, kann der gesamte Aufbau kompakt gestaltet werden und darüber hinaus sind Abstrahlverluste des Lichts, die nicht in den Zwischenraum gelangen, minimiert.

In einer weiteren Ausführungsform ist vorgesehen, dass eine Lichtquelle durch einen Teilbereich des elektronischen Displays selbst gebildet ist, wobei der Teilbereich insbesondere an Randseiten der Spiegel anschließend angeordnet ist. Der Teilbereich ist insbesondere so angeordnet, dass er sich zumindest bereichsweise über das sich zwischen den Spiegeln bemessene Ausmaß des Zwischenraums erstreckt. Es ist somit auch möglich, dass als Lichtquelle keine zusätzliche Komponente verwendet wird, sondern als Lichtquelle ein Teilbereich des elektronischen Displays verwendet wird. Das elektronische Display kann beispielsweise so angeordnet werden, dass der ins Display integrierte und damit einstückig ausgebildete Teilbereich an den jeweiligen Randseiten des ersten und zweiten Spiegels angeordnet ist. Dabei kann sich insbesondere der Teilbereich entlang einer fiktiven Verbindungslinie, die zwischen den Spiegeln gezogen wird, erstrecken.

Beispielsweise kann der Teilbereich mit einer speziellen Folie ausgestattet werden, um die Lichtstrahlen verbessert und somit insbesondere gerichteter emittieren zu können. Somit kann vorteilhaft auf eine Montage von zusätzlichen Lichtquellen verzichtet werden.

Vorzugsweise ist vorgesehen, dass der Teilbereich direkt an den Randseiten beider Spiegel anliegt und den Zwischenraum begrenzt. Der Teilbereich des elektronischen Displays kann insbesondere bündig mit den Randseiten der Spiegeln abschließen und so den Zwischenraum begrenzen bzw. verschließen. Dadurch kann das Licht des Teilbereichs besonders verlustarm und auf kurzem Weg in den Zwischenraum eingestrahlt werden und von den beiden Spiegeln mehrfach reflektiert werden. Somit ergibt sich ein besonders vorteilhafter Endlosspiegeleffekt, da auch ein sehr helles und konturenscharfes holografisches Bild erzeugt werden kann.

In einer denkbaren Ausgestaltung ist vorgesehen, dass einer der beiden Spiegel, insbesondere der dem Display zugewandte erste Spiegel, zumindest bereichsweise semitransparent ausgebildet ist. Für die Durchführung des Endlosspiegeleffekts wird somit insbesondere das Licht der Lichtquelle an den beiden Spiegeln reflektiert andererseits kann die Bildebene durch den ersten Spiegel hindurch betrachtet werden. Um beispielsweise dafür zu sorgen, dass die Lichtstrahlen am ersten Spiegel vollständig reflektiert werden und nicht zum Betrachter hin abgelenkt werden, wird der erste Spiegel beispielsweise als semitransparenter Spiegel ausgebildet. Dadurch können insbesondere Lichtstrahlen von zum Beispiel dem elektronischen Display durchstrahlen. Insbesondere können keine Lichtstrahlen der Lichtquelle, die in den Zwischenraum emittiert wurden, durch den Spiegel aus dem Zwischenraum abgestrahlt werden.

Vorzugsweise ist vorgesehen, dass ein Winkel zwischen dem elektronischen Display und dem ersten Spiegel größer 0° und kleiner 90° ist, insbesondere größer oder gleich 45° und kleiner 90°, insbesondere zwischen größer oder gleich 70° und kleiner 90°, ist. Insbesondere kann der Wert des Winkels im Intervallbereich zwischen 0° und 90° definiert sein, sodass die Spiegelung der optischen Bildinformation in den ersten Spiegel optimal erfolgen kann. Beispielsweise kann der Winkel so gewählt werden, dass der Betrachter stets oberhalb des elektronischen Displays in die virtuelle Bildebene blickt. Das elektronische Display kann dadurch zum ersten Spiegel so geneigt ausgerichtet werden, dass insbesondere eine umfängliche Abstrahlung der Bildinformation des Displays auf den ersten Spiegel erfolgen kann, andererseits aber die Betrachtung des ersten Spiegels nicht eingeschränkt ist.

Gemäß der Erfindung ist vorgesehen, dass ein von dem Display erzeugte, optische Bildinformation über den ersten Spiegel in die Bildebene gespiegelt ist, so dass in dem Bild, das in der Bildebene erzeugt wird, die optische Bildinformation zusätzlich zum Lichtmuster dargestellt ist. Durch insbesondere das mehrfache reflektieren des Lichtstrahls der Lichtquelle an den beiden Spiegeln entstehende Lichtmuster kann für den Betrachter eine optische Tiefenwirkung erzeugt werden. Dabei kann beispielsweise das Lichtmuster in der Bildebene liegen. Das elektronische Display kann die optische Bildinformation erzeugen, welche beispielsweise Musiktitel, Routeninformationen, Fahrzeugdaten, Unterhaltungshinweise etc. beinhalten können. Dies sind nur beispielhafte optische Bildinformationen, die keinesfalls abschließend zu verstehen sind. Grundsätzlich können vielfältigste optische Bildinformationen angezeigt werden. Diese optische Bildinformation kann insbesondere durch den ersten Spiegel in dieselbe Bildebene projiziert werden, in der auch das Lichtmuster projiziert ist.

Das in der Bildebene dargestellte, insbesondere holografische, Bild ist daher insbesondere eine Überlagerung der optischen Bildinformationen und des Lichtmusters. Das Lichtmuster kann insbesondere eine unendliche Tiefenwirkung aufweisen, sodass die projizierte optische Bildinformation in der Bildebene als holografische Darstellung erscheint. Dadurch kann die optische Bildinformation vom Betrachter als eine quasi dreidimensionale, schwebende Darstellung wahrgenommen werden.

In einem Ausführungsbeispiel ist vorgesehen, dass eine elektronische Erfassungseinheit eine Kopfposition und/oder Augenbewegung eines Fahrzeuginsassen des Kraftfahrzeugs erfasst und die Anzeigevorrichtung je nach der erfassten Kopfposition und/oder Augenbewegung angepasst wird. Dadurch kann insbesondere eine dynamische Ausrichtung der optischen Bildinformationen in der Bildebene erreicht werden. Durch die Erfassung der Kopfposition und/oder Augenbewegung des Fahrzeuginsassen kann die Darstellung in der Bildebene so verändert werden, dass der Fahrzeuginsasse die optischen Bildinformationen dreidimensional wahrnehmen kann auch wenn er sich bewegt. Insbesondere ist durch die Anzeigevorrichtung und die Erfassungseinheit eine Vorrichtung für das Kraftfahrzeug gebildet.

Insbesondere kann die Anzeigevorrichtung mit einem Doppelansichtssystem (beispielsweise einer sogenannten Dual View Technologie) ausgestattet werden, und somit können für einen ersten Fahrzeuginsassen und einem zweiten Fahrzeuginsassen jeweils unterschiedliche optische Bildinformationen in einer gemeinsamen Bildebene dargestellt werden.

Beispielsweise kann die Anzeigevorrichtung mit einer Folie ausgestattet werden, und dadurch eine optische Bildinformation für einen ersten Fahrzeuginsassen dargestellt werden und für einen zweiten Fahrzeuginsassen abgeschottet werden oder umgekehrt.

Ein weiterer Aspekt der Erfindung betrifft ein Kraftfahrzeug mit einer Anzeigevorrichtung gemäß dem oben genannten Aspekt oder einer vorteilhaften Ausführung davon, wobei mit der Anzeigevorrichtung eine optische Information in einer virtuellen Bildebene darstellbar ist. Dabei ist die Anzeigevorrichtung beispielsweise im oder am Armaturenbrett des Fahrzeugs ausgebildet. Die Anzeigevorrichtung weist insbesondere zwei Spiegel und ein elektronisches Display auf, welches eine optische Bildinformation erzeugt, welche mit dem Display zugeordneten Spiegel in die virtuelle Bildebene projiziert wird.

Ein weiterer Aspekt der Erfindung betrifft ein Verfahren zur Erzeugung einer virtuellen Darstellung von optischen Informationen in einer virtuellen Bildebene mit einer Anzeigevorrichtung, wobei eine Bildinformation von einem elektronischen Display der Anzeigevorrichtung mit einem ersten Spiegel der Anzeigevorrichtung in die virtuelle Bildebene reflektiert wird. Zumindest ein Lichtstrahl einer Lichtquelle der Anzeigevorrichtung wird in einen Zwischenraum zwischen dem ersten Spiegel und einem dazu separaten und beabstandet angeordneten zweiten Spiegel der Anzeigevorrichtung emittiert. Der Lichtstrahl wird in dem Zwischenraum zur Erzeugung eines Endlosspiegeleffekts vielfach zwischen den Spiegel reflektiert, wobei dadurch in der, zumindest einen einzigen, virtuellen Bildebene der Anzeigevorrichtung ein Bild mit einem mit optischer Tiefenwirkung erscheinendem (holografischem) Lichtmuster erzeugt wird. Insbesondere werden die virtuelle Darstellung der optischen Bildinformation und das Lichtmuster in dem Bild in derselben Bildebene als optische Information dargestellt.

Vorteilhafte Ausführungen der Anzeigevorrichtung sind als vorteilhafte Ausführungen des Verfahrens anzusehen, wobei dazu die Komponenten der Anzeigevorrichtung für sich betrachtet oder zumindest in Komponentenkombinationen, insbesondere bezüglich ihrer Ausgestaltung und/oder Position, insbesondere auch zueinander, die jeweiligen Verfahrensschritte zur Erzeugung des Bilds ermöglichen.

Die optische Bildinformation kann beispielsweise vom elektronischen Display erzeugt und mit dem ersten Spiegel in die virtuelle Bildebene projiziert werden. Die Bildebene wird insbesondere zwischen dem ersten Spiegel und dem zweiten Spiegel erzeugt.

Ausführungsbeispiele der Erfindung werden nachfolgend anhand von schematischen Figuren beschrieben. Hierzu zeigt:
- Fig. 1: ein Ausführungsbeispiel eines Kraftfahrzeugs mit einem Ausführungsbeispiel einer Anzeigevorrichtung;
- Fig. 2: eine schematische, perspektivische Darstellung eines Ausführungsbeispiels einer Anzeigevorrichtung;
- Fig. 3: eine schematische Seitenansicht der Anzeigevorrichtung gemäß Fig. 2;
- Fig. 4: eine schematische, perspektivische Darstellung eines weiteren Ausführungsbeispiels einer Anzeigevorrichtung;
- Fig. 5: eine schematische Seitenansicht der Anzeigevorrichtung gemäß Fig. 4; und
- Fig. 6: eine schematische Darstellung eines Bilds in einer Bildebene mit einer optischen Bildinformation und einem Lichtmuster, wie es durch eine Anzeigevorrichtung erzeugt ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind gleiche oder funktionsgleiche Elemente mit denselben Bezugszeichen versehen.

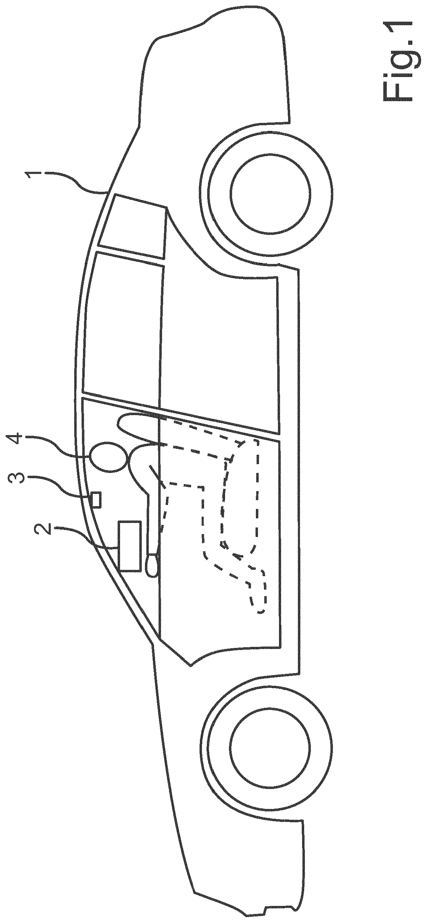

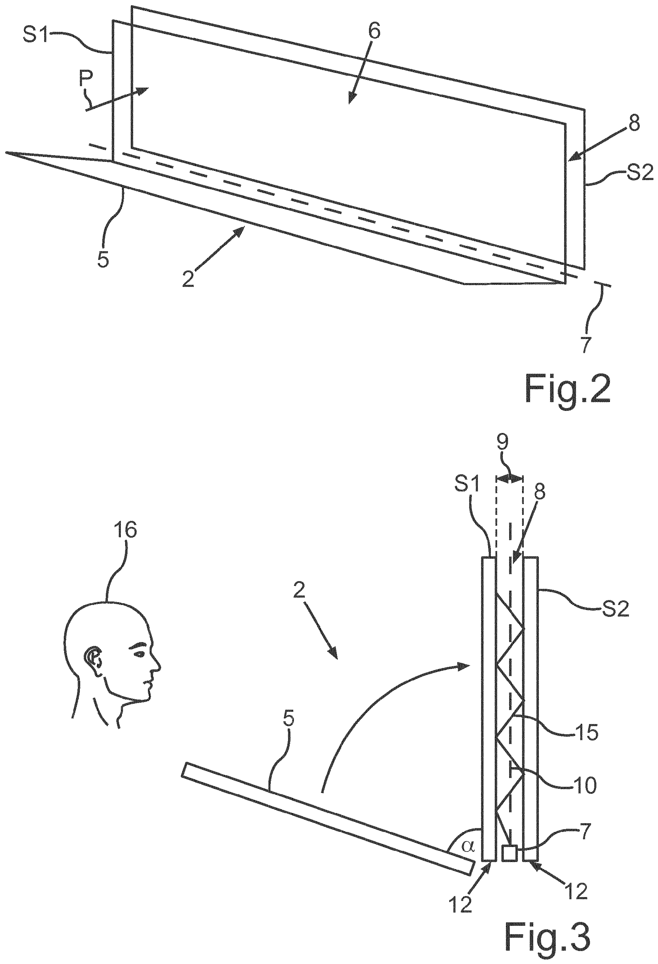

Insgesamt zeigt die Fig. 1 ein vorteilhaftes Ausführungsbeispiel mit einem Kraftfahrzeug 1 und einer im Kraftfahrzeug 1 installierten optische Anzeigevorrichtung 2. Die Anzeigevorrichtung 2 kann eine virtuelle Darstellung von optischen Informationen in einer virtuellen Bildebene 10 (vergleiche Fig. 3) erzeugen.

Mit einer elektronischen Erfassungseinheit 3 des Kraftfahrzeugs 1 kann insbesondere eine Kopfposition und/oder Augenbewegung eines Fahrzeuginsassen 4 erfasst werden. Je nach Änderung der erfassten Kopfposition und/oder Augenbewegung des Fahrzeuginsassen 4 kann insbesondere die Anzeigevorrichtung 2 angepasst werden. Beispielsweise kann eine Anpassung der Anzeigevorrichtung 2 automatisch, je nach der aktuellen Kopfposition und/oder Augenbewegung erfolgen. Beispielsweise kann die gesamte Anzeigevorrichtung 2 verändert werden. Insbesondere kann das elektronische Display 5 verändert werden, indem der Winkel zwischen dem elektronischen Display 5 und dem ersten Spiegel S1 angepasst wird. Hier noch ergänzen was angepasst wird

Die Fig. 2 zeigt eine beispielhafte Ausführung der Anzeigevorrichtung 2. Die Anzeigevorrichtung 2 weist zumindest ein elektronisches Display 5 und einen ersten Spiegel S1, sowie einen dazu beabstandeten zweiten Spiegel S2 auf. Insbesondere sind die beiden Spiegel S1, S2 so angeordnet, dass sie bei einer Projektionsbetrachtung auf beide Spiegel S1, S2 in einer Projektionsebene zumindest bereichsweise überlappend angeordnet sind. Beispielhaft ist die Richtung der Projektionsbetrachtung mit dem Pfeil P symbolisiert. Insbesondere ist eine Projektionsbetrachtung senkrecht zu den Ebenen, in denen sich die Spiegel S1, S2 aufspannen. Dabei kann beispielsweise ein Überlappungsbereich 6 einen Zwischenraum 8 (siehe Fig. 3) zwischen dem ersten Spiegel S1 und dem zweiten Spiegel S2 bezüglich der flächigen Ausmaße definieren beziehungsweise aufspannen. Die beiden Spiegel S1, S2 sind insbesondere parallel zueinander angeordnet. Sie können vorzugsweise gleich groß sein und bei der Projektionsbetrachtung deckungsgleich angeordnet sein.

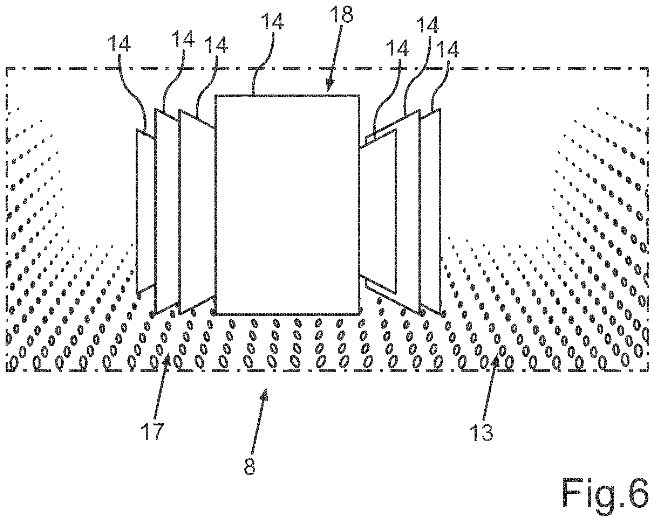

Die Anzeigevorrichtung 2 weist beispielsweise zumindest eine Lichtquelle 7 auf, welche beispielsweise eine Leuchtdiode oder ein Leuchtdioden-Band sein kann. Die Lichtquelle 7 kann so angeordnet werden, dass deren Licht in den Zwischenbereich 8 emittiert wird. Ein Lichtstrahl 15 des Lichts kann insbesondere an den beiden Spiegeln S1, S2 mehrfach hin und her reflektiert werden und dadurch ein Endlosspiegeleffekt erzeugt wird. Durch die mehrfach beziehungsweise unendliche Reflexion des Lichtstrahls 15 wird insbesondere ein, vorzugsweise holografisches, Lichtmuster 13 (vergleiche Fig. 6) in der Bildebene 10 erzeugt. Die Anzeigevorrichtung 2 ist so ausgebildet, dass nur eine einzige Bildebene 10 gebildet ist. Diese Bildebene 10 ist insbesondere in dem Zwischenraum 8 ausgebildet und insbesondere parallel zu den Spiegeln S1, S2 orientiert, wie dies in Fig. 3 gezeigt ist. Um den Endlosspiegeleffekt effizienter zu gestalten, kann insbesondere der erste Spiegel S1 zumindest bereichsweise semitransparent ausgebildet werden.

In der Fig. 3 ist eine schematische Seitenansicht der Anzeigevorrichtung 2 dargestellt. Dieser Zwischenraum 8 weist ein bemessenes Ausmaß 9 auf, welches durch den Abstand der einander zugewandten Innenseiten der Spiegel S1, S2 gegeben ist. In Höhenrichtung ist der Zwischenraum 8 durch die Höhen der Spiegel S1, S2 begrenzt.

Das elektronische Display 5 kann insbesondere schräg zum ersten Spiegel S1 angeordnet sein. Dabei kann das elektronische Display 5 mit einem Rand beispielsweise bündig am ersten Spiegel S1 anliegen. Insbesondere kann ein Winkel α zwischen dem ersten Spiegel S1 und dem elektronischen Display 5 vorgegeben sein. Dabei kann der Winkel α beispielsweise größer 0° und kleiner 90° sein bzw. größer oder gleich 70° und kleiner 90° sein. Der Winkel α wird insbesondere im Intervall von 0° und 90° festgelegt, so dass der Betrachter 16 stets oberhalb des elektronischen Displays 5 in die virtuelle Bildebene 8 blickt.

Die Lichtquelle 7 kann insbesondere bereichsweise in dem Zwischenraum 8 des ersten Spiegels S1 und zweiten Spiegels S2 angeordnet sein, wie dies in Fig. 3 gezeigt ist. Der Zwischenraum 8 ist durch Schmalkanten beziehungsweise Randseiten 12 der Spiegel S1, S2 in der Höhe begrenzt. Die Lichtquelle 7 kann so angeordnet sein, dass der Abstand zum Spiegel S1 und zum Spiegel S2 gleich groß ist. Beispielsweise können aber die Abstände zum ersten Spiegel S1 bzw. zum zweiten Spiegel S2 unterschiedlich sein. Insbesondere kann die Lichtquelle 7 an einem der in Höhenrichtung betrachtet beiden Enden des Zwischenraums 7 angeordnet werden. Um eine umfänglichere Emittierung in den Zwischenraum 8 zu erlangen, können insbesondere mehrere Lichtquellen in dem Zwischenraum 8 angeordnet werden.

Insbesondere wird die vom elektronischen Display 5 erzeugte optische Bildinformation über den ersten Spiegel S1 in die Bildebene 10 gespiegelt. Die einzige Bildebene 10 befindet sich im Zwischenraum 8 des ersten Spiegels S1 und des zweiten Spiegels S2. Es kann ebenfalls vorgesehen sein, dass die Bildebene 10 sich mit dem zweiten Spiegel S2 überlagert und somit die Bildebene in der Ebene des zweiten Spiegels S2 liegt. Durch das Lichtmuster, welches durch den Endlosspiegeleffekt der vielfach reflektierten Lichtstrahlen erzeugt wird, und die optische Bildinformation 18 (Fig. 6) des elektronischen Displays 5 wird in der Bildebene 10 ein Bild 17 (Fig. 6) erzeugt, in dem diese beiden separaten Bildteile gemeinsam, insbesondere auch überlagert dargestellt werden. Das Bild 17 ist mit Tiefenwirkung erzeugt und auch als holografisches Bild 17 erzeugt.

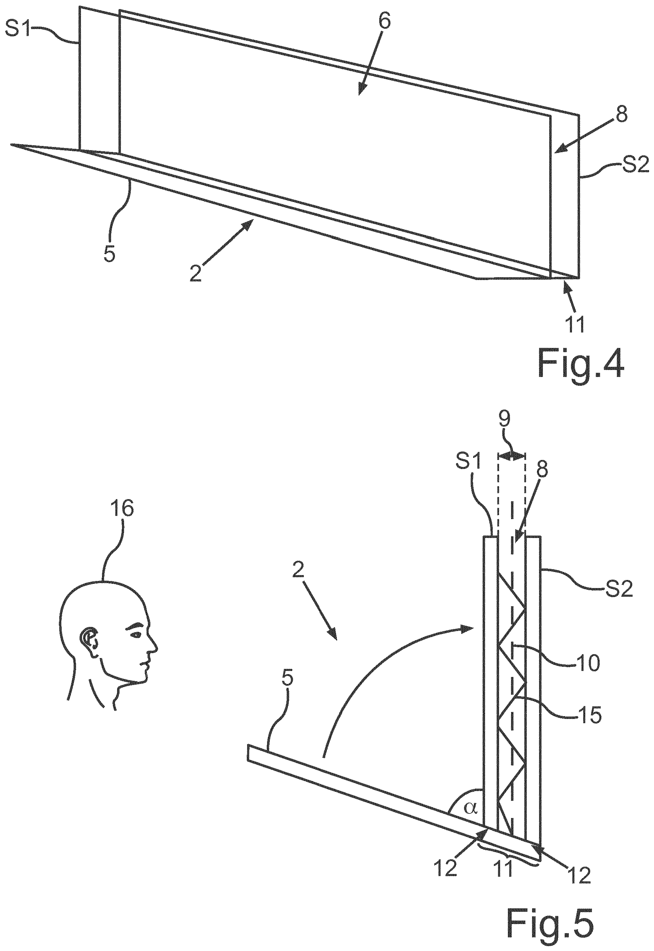

Die Fig. 4 zeigt eine beispielhafte Anordnung eines weiteren Ausführungsbeispiels einer Anzeigevorrichtung 2 gezeigt, bei welche die Lichtquelle durch einen Teilbereich 11 des elektronischen Displays 5 selbst gebildet ist. Beispielsweise kann das elektronische Display 5 aus unterschiedlichen Displayteilen ausgebildet sein. Der Teil des elektronischen Displays 5, der sich insbesondere vor dem ersten Spiegel S1 befindet, dient zur Erzeugung der optischen Bildinformation. Insbesondere kann der Displayteil, welcher sich zumindest bereichsweise über den Zwischenraum 8 der beiden Spiegel S1, S2 erstreckt, und durch den Teilbereich 11 gebildet ist, und somit in Richtung senkrecht zu den Spiegeln S1, S2 betrachtet überlappend mit dem Zwischenraum 8 angeordnet ist, zur Emittierung des Lichts in den Zwischenraum 8 verwendet werden. Dabei kann der Teilbereich 11 beispielsweise mit einer speziellen Folie ausgebildet sein, um eine spezifische Emittierung zu erreichen. Der Teilbereich 11 erstreckt sich im Ausführungsbeispiel über das gesamte Ausmaß 9 und deckt somit den Zwischenraum 8 begrenzend ab (Fig. 5)

In der Fig. 5 ist eine beispielshafte Seitenansicht der Anzeigevorrichtung 2 mit dem Teilbereich 11 des elektronischen Displays 5 als Lichtquelle dargestellt. Dabei kann insbesondere der Teilbereich 11 an Randseiten 12 der beiden Spiegel S1, S2 angeordnet sein. Insbesondere kann der Teilbereich 11 direkt und bündig an den Randseiten der beiden Spiegel S1, S2 anliegen und somit den Zwischenraum 8 nach unten gegenständlich begrenzen. Dadurch wird das Erzeugen des Endlosspiegeleffekts verbessert.

Die beiden Beispiele in Fig. 2 und 3 sowie 4 und 5 können insbesondere bezüglich der Lichtquelle 7 und dem Teilbereich 11 auch kombiniert werden.

Die Fig. 6 zeigt eine beispielhafte und nicht abschließend zu verstehende Darstellung der Bildebene 10 mit der optischen Bildinformation 18 und dem Lichtmuster 13. Insbesondere entsteht durch die mehrfache Reflexion der Lichtstrahlen 15 der Lichtquelle 7 und/oder des Teilbereichs 11 an den beiden Spiegeln S1, S2 das Lichtmuster 13 in der Bildebene 8. Das Lichtmuster 13 kann beispielsweise aus Lichtlinien oder Lichtpunkten ausgebildet sein. Durch dieses Lichtmuster 13 entsteht insbesondere für einen Betrachter 16 eine optisch unendliche Tiefenwirkung der optischen Bildinformation 18. Die optische Bildinformation 18 wird insbesondere durch das elektronische Display 5 erzeugt und durch Spiegelung an dem ersten Spiegel S1 in die Bildebene 10 projiziert. Dadurch kann sich beispielsweise eine holografische Darstellung für den Betrachter 16 ergeben. Die optische Bildinformation 18 kann insbesondere mehrere Bildinformationselemente 14 beinhalten. Die Bildinformationselemente 14 können z.B. unterschiedlichen Informationen oder Designs darstellen, die auch überlagert angezeigt und wahrgenommen werden können.

## Patentansprüche

1. Anzeigevorrichtung (2) für ein Kraftfahrzeug (1), mit zumindest einem elektronischen Display (5), mit einem ersten Spiegel (S1) und einem dazu beabstandet angeordneten zweiten Spiegel (S2), wobei die beiden Spiegel (S1, S2) so angeordnet sind, dass sie bei einer Projektionsbetrachtung auf beide Spiegel (S1, S2) zumindest bereichsweise überlappend angeordnet sind, und in dem Überlappungsbereich (6) ein Zwischenraum (8) zwischen den Spiegeln (S1, S2) ausgebildet ist,
**dadurch gekennzeichnet, dass**
die Anzeigevorrichtung (2) zumindest eine Lichtquelle (7) aufweist, die so angeordnet ist, dass deren Licht in den Zwischenraum (8) emittierbar und dort an den Spiegeln (S1, S2) zur Erzeugung eines Endlosspiegeleffekts mehrfach reflektierbar ist, so dass in einer Bildebene (10) der Anzeigevorrichtung (2) ein Bild (17) mit einem mit optischer Tiefenwirkung erscheinendem Lichtmuster (13) entsteht, wobei eine von dem elektronischen Display (5) erzeugte, optische Bildinformation (18) über den ersten Spiegel (S1) in die Bildebene (10) gespiegelt ist, so dass in dem Bild (17) die optische Bildinformation (18) zusätzlich zum Lichtmuster (13) dargestellt ist.

2. Anzeigevorrichtung (2) nach Anspruch 1,
**dadurch gekennzeichnet, dass**
eine Lichtquelle (7) eine zum elektronischen Display (5) separate Komponente ist, insbesondere eine Leuchtdiode oder ein Leuchtdiodenband ist.

3. Anzeigevorrichtung (2) nach Anspruch 2,
**dadurch gekennzeichnet, dass**
die Lichtquelle (7) zumindest bereichsweise in dem durch die Spiegel (S1, S2) begrenzten Zwischenraum (8) angeordnet ist.

4. Anzeigevorrichtung (2) nach einem der vorhergehenden Ansprüche,
**dadurch gekennzeichnet, dass**
eine Lichtquelle (7) durch einen Teilbereich (11) des elektronischen Displays (5) selbst gebildet ist, wobei der Teilbereich (11) an Randseiten (12) der Spiegel (S1, S2) anschließend angeordnet ist und so angeordnet ist, dass er sich zumindest bereichsweise über das sich zwischen den Spiegeln (S1, S2) bemessene Ausmaß (9) des Zwischenraums (8) erstreckt.

5. Anzeigevorrichtung (2) nach Anspruch 4,
**dadurch gekennzeichnet, dass**
der Teilbereich (11) direkt an den Randseiten (12) beider Spiegel (S1, S2) anliegt und den Zwischenraum (8) begrenzt.

6. Anzeigevorrichtung (2) nach Anspruch 4 oder 5,
**dadurch gekennzeichnet, dass**
das elektronische Display (5) aus unterschiedlichen Displayteilen ausgebildet ist, wobei der Teil des elektronischen Displays (5), der sich vor dem ersten Spiegel (S1) befindet, zur Erzeugung der optischen Bildinformation (18) dient, und wobei der Displayteil, welcher sich zumindest bereichsweise über den Zwischenraum (8) der beiden Spiegeln (S1, S2) erstreckt, und durch den Teilbereich (11) gebildet ist, und somit in Richtung senkrecht zu den Spiegeln (S1, S2) betrachtet überlappend mit dem Zwischenraum (8) angeordnet ist, zur Emittierung des Lichts in den Zwischenraum (8) verwendet werden.

7. Anzeigevorrichtung (2) nach einem der vorhergehenden Ansprüche,
**dadurch gekennzeichnet, dass**
einer der beiden Spiegel (S1, S2), insbesondere der dem elektronischen Display (5) zugewandte erste Spiegel (S1), zumindest bereichsweise semitransparent ausgebildet ist.

8. Anzeigevorrichtung (2) nach einem der vorhergehenden Ansprüche,
**dadurch gekennzeichnet, dass**
ein Winkel (α) zwischen dem elektronischen Display (5) und dem ersten Spiegel (S1) größer 0° und kleiner 90° ist, insbesondere größer oder gleich 45° und kleiner 90° ist.

9. Kraftfahrzeug (1) mit einer Anzeigevorrichtung (2) nach einem der vorhergehenden Ansprüche, wobei mit der Anzeigevorrichtung (2) eine optische Information in einer virtuellen Bildebene (10) darstellbar ist.

10. Verfahren zur Erzeugung einer virtuellen Darstellung von optischen Informationen in einer virtuellen Bildebene (10) mit einer Anzeigevorrichtung (2) nach einem der Ansprüche 1 bis 8, wobei eine Bildinformation (18) von einem elektronischen Display (5) der Anzeigevorrichtung (2) mit einem ersten Spiegel (S1) der Anzeigevorrichtung (2) in die virtuelle Bildebene (10) reflektiert wird, und wobei zumindest ein Lichtstrahl (15) einer Lichtquelle (7) der Anzeigevorrichtung (2) in einen Zwischenraum (8) zwischen dem ersten Spiegel (S1) und einem dazu separaten und beabstandet angeordneten zweiten Spiegel (S2) der Anzeigevorrichtung (2) emittiert wird, und der Lichtstrahl (15) in dem Zwischenraum (8) zur Erzeugung eines Endlosspiegeleffekts vielfach zwischen den Spiegeln (S1, S2) reflektiert wird, wobei dadurch in der virtuellen Bildebene (10) der Anzeigevorrichtung (2) ein Bild (17) mit einem mit optischer Tiefenwirkung erscheinendem Lichtmuster (13) erzeugt wird die virtuelle Darstellung der Bildinformation (18) und das Lichtmuster (13) in dem Bild (17) in derselben Bildebene (10) als optische Information dargestellt werden.

## Claims

1. Display device (2) for a motor vehicle (1), having at least one electronic display (5), having a first mirror (S1), and a second mirror (S2) arranged at a distance therefrom, wherein the two mirrors (S1, S2) are arranged so as to overlap at least in some regions in a projection view of the two mirrors (S1, S2), and an intermediate space (8) is formed between the mirrors (S1, S2) in the overlap region (6), **characterised in that**
the display device (2) has at least one light source (7) which is arranged such that its light can be emitted into the intermediate space (8), where said light can be reflected multiple times on the mirrors (S1, S2) in order to generate an infinity mirror effect such that an image (17) with a light pattern (13) that gives the appearance of an optical depth effect is formed in an image plane (10) of the display device (2), wherein a visual image information item (18) generated by the electronic display (5) is mirrored into the image plane (10) via the first mirror (S1) such that the visual image information item (18) is represented in the image (17) in addition to the light pattern (13).

2. Display device (2) according to claim 1,
**characterised in that**
a light source (7) is a separate component from the electronic display (5), in particular a light-emitting diode or a light-emitting diode strip.

3. Display device (2) according to claim 2,
**characterised in that**
the light source (7) is arranged at least in some regions in the intermediate space (8) delimited by the mirrors (S1, S2).

4. Display device (2) according to any of the preceding claims, **characterised in that**
a light source (7) is formed by a partial region (11) of the electronic display (5) itself, wherein the partial region (11) is arranged adjacent to peripheral sides (12) of the mirrors (S1, S2) and is arranged in such a way that it extends at least in some regions over the extent (9), measured between the mirrors (S1, S2), of the intermediate space (8).

5. Display device (2) according to claim 4,
**characterised in that**
the partial region (11) lies directly against the peripheral sides (12) of both mirrors (S1, S2) and delimits the intermediate space (8).

6. Display device (2) according to claim 4 or 5,
**characterised in that**
the electronic display (5) is formed from different display parts, wherein the part of the electronic display (5) that is located upstream of the first mirror (S1) is used to generate the visual image information item (18), and wherein the display part which extends at least in some regions over the intermediate space (8) of the two mirrors (S1, S2), and is formed by the partial region (11), and is thus arranged overlapping with the intermediate space (8) as viewed in a direction perpendicular to the mirrors (S1, S2), is used to emit the light into the intermediate space (8).

7. Display device (2) according to any of the preceding claims, **characterised in that**
one of the two mirrors (S1, S2), in particular the first mirror (S1) facing the electronic display (5), is semi-transparent at least in some regions.

8. Display device (2) according to any of the preceding claims, **characterised in that**
an angle (a) between the electronic display (5) and the first mirror (S1) is greater than 0° and smaller than 90°, in particular greater than or equal to 45° and smaller than 90°.

9. Motor vehicle (1) having a display device (2) according to any of the preceding claims, wherein the display device (2) can be used to display a visual information item in a virtual image plane (10).

10. Method for generating a virtual representation of visual information in a virtual image plane (10) using a display device (2) according to any of claims 1 to 8, wherein an image information item (18) from an electronic display (5) of the display device (2) is reflected into the virtual image plane (10) using a first mirror (S1) of the display device (2), and wherein at least one light beam (15) of a light source (7) of the display device (2) is emitted into an intermediate space (8) between the first mirror (S1) and a second mirror (S2) of the display device (2) which is separate therefrom and arranged at a distance therefrom, and the light beam (15) is reflected multiple times between the mirrors (S1, S2) in the intermediate space (8) to generate an infinity mirror effect, wherein, as a result, an image (17) with a light pattern (13) that gives the appearance of an optical depth effect is generated in the virtual image plane (10) of the display device (2), the virtual representation of the image information item (18) and the light pattern (13) are represented as a visual information item in the image (17) in the same image plane (10).

## Revendications

1. Dispositif d'affichage (2) pour un véhicule automobile (1), avec au moins un affichage électronique (5), avec un premier miroir (S1) et un second miroir (S2) agencé à distance de celui-ci, dans lequel les deux miroirs (S1, S2) sont agencés de telle sorte qu'ils se chevauchent au moins par zones lors d'une observation en projection sur les deux miroirs (S1, S2), et dans lequel un espace intermédiaire (8) est réalisé entre les miroirs (S1, S2) dans la zone de chevauchement (6), **caractérisé en ce que**
le dispositif d'affichage (2) présente au moins une source de lumière (7) qui est agencée de telle sorte que sa lumière peut être émise dans l'espace intermédiaire (8) et y être réfléchie plusieurs fois sur les miroirs (S1, S2) pour produire un effet de miroir sans fin, de sorte qu'une image (17) avec un motif lumineux (13) apparaissant avec un effet de profondeur optique apparaît dans un plan d'image (10) du dispositif d'affichage (2), dans lequel une information d'image optique (18) générée par l'affichage électronique (5) est réfléchie dans le plan d'image (10) par l'intermédiaire du premier miroir (S1), de sorte que l'information d'image optique (18) est représentée dans l'image (17) en plus du motif lumineux (13).

2. Dispositif d'affichage (2) selon la revendication 1,
**caractérisé en ce que**
une source de lumière (7) est un composant séparé de l'affichage électronique (5), en particulier une diode électroluminescente ou une bande de diodes électroluminescentes.

3. Dispositif d'affichage (2) selon la revendication 2,
**caractérisé en ce que** la source de lumière (7) est agencée au moins par zones dans l'espace intermédiaire (8) délimité par les miroirs (S1, S2).

4. Dispositif d'affichage (2) selon l'une quelconque des revendications précédentes, **caractérisé en ce que**
une source de lumière (7) est formée par une zone partielle (11) de l'affichage électronique (5) lui-même, dans lequel la zone partielle (11) est agencée à la suite des côtés de bord (12) des miroirs (S1, S2) et est agencée de telle sorte qu'elle s'étend au moins par zones sur l'étendue (9) de l'espace intermédiaire (8) qui est dimensionnée entre les miroirs (S1, S2).

5. Dispositif d'affichage (2) selon la revendication 4,
**caractérisé en ce que**
la zone partielle (11) s'appuie directement sur les côtés de bord (12) des deux miroirs (S1, S2) et délimite l'espace intermédiaire (8).

6. Dispositif d'affichage (2) selon la revendication 4 ou 5,
**caractérisé en ce que**
l'affichage électronique (5) est réalisé à partir de différentes parties d'affichage, dans lequel la partie de l'affichage électronique (5) qui se trouve devant le premier miroir (S1) sert à produire l'information d'image optique (18), et dans lequel la partie d'affichage, qui s'étend au moins par zones sur l'espace intermédiaire (8) des deux miroirs (S1, S2) et qui est formée par la zone partielle (11), et qui est donc agencée en chevauchement avec l'espace intermédiaire (8), vue dans la direction perpendiculaire aux miroirs (S1, S2), est utilisée pour l'émission de la lumière dans l'espace intermédiaire (8).

7. Dispositif d'affichage (2) selon l'une quelconque des revendications précédentes, **caractérisé en ce que**
l'un des deux miroirs (S1, S2), en particulier le premier miroir (S1) tourné vers l'écran électronique (5), est réalisé de manière semi-transparente au moins par zones.

8. Dispositif d'affichage (2) selon l'une quelconque des revendications précédentes, **caractérisé en ce que**
un angle (a) entre l'affichage électronique (5) et le premier miroir (S1) est supérieur à 0° et inférieur à 90°, en particulier supérieur ou égal à 45° et inférieur à 90°.

9. Véhicule automobile (1) avec un dispositif d'affichage (2) selon l'une quelconque des revendications précédentes, dans lequel le dispositif d'affichage (2) permet de représenter une information optique dans un plan d'image virtuel (10).

10. Procédé pour générer une représentation virtuelle d'informations optiques dans un plan d'image virtuel (10) avec un dispositif d'affichage (2) selon l'une quelconque des revendications 1 à 8, dans lequel une information d'image (18) est réfléchie par un affichage électronique (5) du dispositif d'affichage (2) avec un premier miroir (S1) du dispositif d'affichage (2) dans le plan d'image virtuel (10), et dans lequel au moins un faisceau lumineux (15) d'une source de lumière (7) du dispositif d'affichage (2) est émis dans un espace intermédiaire (8) entre le premier miroir (S1) et un second miroir (S2) du dispositif d'affichage (2) agencé séparément et à distance de celui-ci, et le faisceau lumineux (15) est réfléchi plusieurs fois dans l'espace intermédiaire (8) entre les miroirs (S1, S2) pour produire un effet de miroir sans fin, dans lequel une image (17) avec un motif lumineux (13) apparaissant avec un effet de profondeur optique est ainsi générée dans le plan d'image virtuel (10) du dispositif d'affichage (2), la représentation virtuelle de l'information d'image (18) et le motif lumineux (13) sont représentés dans l'image (17) dans le même plan d'image (10) comme information optique.
